# EUROPEAN PATENT SPECIFICATION

(11) **EP 4 687 286 B1**
(45) Date of publication and mention of the grant of the patent: **26.08.2026**
(21) Application number: 25191890.0
(22) Date of filing: 25.07.2025
(51) Int. Cl.: H02S 20/23

(54) **SYSTEM AND METHOD FOR INSTALLATION OF SOLAR PANELS ON CARPORTS**
SYSTEM UND VERFAHREN ZUR INSTALLATION VON SOLARPANEELEN AUF CARPORTS
SYSTÈME ET PROCÉDÉ D'INSTALLATION DE PANNEAUX SOLAIRES SUR DES ABRIS DE VOITURE

(30) Priority: 30.07.2024 LU 103350
(43) Date of publication of application: 04.02.2026
(73) Proprietor: Iparlux S.à.r.l., 2430 Luxembourg (LU)
(72) Inventor: GOURDANGE, Anthony, 6821 Lacuisine (BE)
(74) Representative: Boncea, Oana-Laura

(56) References cited:
- EP-A2- 2 696 151
- CN-U- 211 421 982
- FR-A1- 2 971 838

## Description

### TECHNICAL FIELD

The present invention relates in general to mounting of solar panels on roof structures. More specifically, the present invention relates to a system and method for installation of solar panels on carports without drilling of a frame for installation, providing sliding of solar panels on rails and allowing dimensional adjustment and watertightness.

### BACKGROUND OF THE INVENTION

With the increased use of photovoltaic (PV) roofing systems for generating electricity, a demand for mounting hardware, which attaches frames for the purpose of installing the PV modules to the roof structure or any other support structure, has been developed. In recent years, various kinds of mounting structures have been used which allow the installation of PV modules to the roof support structures. Mounting structures come in a variety of sizes and patterns to meet installation purposes. However, conventional mounting structures for supporting PV modules still have considerable drawbacks.

Many mounting structures utilize rails to mount the PV modules to the roof structure to form a PV array. However, the existing solar panel support structures are directly fixed to rails requiring drilling of a support frame for installation. In such solutions rainwater is directed with the rails without ensuring a watertight seal. The drilling of the support frame also can be undesirable because the removal or replacement of PV panels installed is difficult and can result in rework thereby increasing labor and material costs. Various mounting systems for PV panels are known in the prior art, as for example disclosed in CN 211421982U, FR 2971838 A1 and EP2696151A2.

Moreover, the conventional systems limit the PV array dimensional and layout possibilities and dramatically increase the time for designing, engineering and installing the mounting structures as the existing systems are expensive, difficult to use and require the same, specifically engineered types of PV panels so that any dimensional adjustment is not possible since otherwise it would be necessary to adjust dimensions of their shelters.

Therefore, there is a need to develop a system for easy and fast installation of solar panels on carports, that allows the solar panels to slide on rails, does not require drilling the support frame, enables dimensional adjustment (being able to install all types of PV panels) and ensures total watertightness.

### SUMMARY OF THE INVENTION

In order to effectively solve the above-mentioned problems, according one aspect, the present invention is directed to a system for installing photovoltaic (PV) panels on a support structure, the system comprising: support panels, rail assemblies attached to the support panels, and fastening assemblies for slidably installing of the PV panels to the rail assemblies, wherein: each of the rail assemblies comprises a bottom rail and a mating top rail fixed to the bottom rail, the rails being provided with rubber seals along rail longitudinal lengths; each of the support panels is tightly clamped by one end between the rubber seals of the bottom rail and top rail of one rail assembly, and by an opposite end between the rubber seals of the bottom rail and top rail of another rail assembly, such that facing ends of each two adjacent support panels share the same rail assembly; each of the fastening assemblies comprises: a fastening base member, two hammer head screws each secured to the fastening base member by a threaded portion and slidably engaging by a hammer head portion with a mating top longitudinal groove of a corresponding top rail, a fastening clip engaging with a mating grooved channel of the fastening base member, and a mating clamp fixed on the fastening clip for clamping a PV panel at least from one longitudinal side of the clamp between the fastening base member and the clamp so that each PV panel fastened using the fastening assemblies is provided directly above each support panel.

In one preferable embodiment, the mating top rail is selected from a middle top rail and an end top rail, the bottom rail and the middle top rail each being provided with two spaced rubber seals that are attached along both longitudinal sides of the rail from a rail longitudinal central axis, and the end top rail being provided with one rubber seal attached along one of two longitudinal sides of the end top rail from a rail longitudinal central axis; each of the support panels is tightly clamped by the one end between one of the two rubber seals of the bottom rail and a corresponding one of the two rubber seals of the middle top rail of the one rail assembly, and by the opposite end between one of the two rubber seals of the bottom rail and the corresponding rubber seal of the middle top rail or the end top rail of said another rail assembly, wherein the facing ends of each two adjacent cellular polycarbonate panels are clamped between a corresponding one of two opposite rubber seals of the bottom rail and a corresponding one of two opposite rubber seals of the top rail of the same rail assembly.

In another preferable embodiment, the mating clamp is selected from a middle clamp and an end clamp, the middle clamp configured for clamping two PV panels of the PV panels from both longitudinal sides of the middle clamp, and the end clamp configured for clamping one PV panel of the PV panels from one of the longitudinal sides of the end clamp.

In another preferable embodiment, the bottom rail and the top rail are formed to be continuous long extrusion molding members fixed to each other by longitudinal central sections, and wherein preferably the top rail is fixed on top of the bottom rail with a top wall portion of the bottom rail inserted into a complementary bottom groove of the top rail.

In another preferable embodiment, each rubber seal is formed to be a continuous long member comprising a main body having a bottom surface that tightly contacts the support panel, and a flanged protrusion extending in a vertical direction from a central part of a top surface and tightly engaging with a corresponding U-shaped grooved portion comprised along the whole longitudinal length of the rail, wherein the bottom surface of the rubber seal preferably is waved or ribbed.

In another preferable embodiment, the top longitudinal groove of each top rail is U-shaped and is formed from an upper side of the top rail along a longitudinal central axis of the top rail.

In another preferable embodiment, the support structure is a carport, and the system further comprises at least two columns to be fixed by a first end to the floor or ground at a distance from each other, at least two load-bearing members each obliquely fixed by one end to a second end of the corresponding column, and at least three crossmembers secured at a distance from each other on the at least two load-bearing members, wherein the bottom rails are arranged on the crossmembers at a cross-sectional direction to the length of the crossmembers and are fixed to the crossmembers.

In another preferable embodiment, the system further comprises a gutter for collecting rainwater, which is mounted to the at least two load-bearing members using gutter brackets each fixed to a corresponding one of the load-bearing side members at the end by which the load-bearing side member is attached to the column, such that the gutter is provided at the edge where the columns connect with the load-bearing side members, at a cross-sectional direction to the length of the load-bearing side members, wherein preferably the gutter bracket is provided with a C-shaped recess that fits a C-shaped wall portion comprised by the gutter.

In another preferable embodiment, the support panels are made of cellular polycarbonate.

According to a second aspect, the present invention is directed to a method of installing PV panels on a support structure, comprising the following steps: providing bottom rails and mating top rails adapted for slidably installing of the PV panels thereon, providing support panels; providing fastening base members, hammer head screws, fastening clips and clamps mating the fastening clips; attaching rubber seals to the bottom rails and the top rails along rail longitudinal lengths; tightly clamping each of the support panels by one end between the rubber seals of the bottom rail and the mating top rail forming one rail assembly, and by an opposite end between the rubber seals of the bottom rail and the mating top rail forming another rail assembly, such that facing ends of each two adjacent support panels share the same rail assembly; securing two hammer head screws to each of the fastening base members by a threaded portion; slidably engaging the two hammer head screws by a hammer head portion with a mating top longitudinal groove of a corresponding top rail; engaging the fastening clip with a mating grooved channel of each of the fastening base members; and clamping a PV panel at least from one longitudinal side of each clamp between the corresponding fastening base member and the clamp by fixing the clamp to the fastening clip, wherein each fastening base member with two hammer head screws, one fastening clip and one clamp attached to the fastening base member form a fastening assembly, and each PV panel fastened using the fastening assemblies is provided directly above each support panel.

In one preferable embodiment, the method further comprises fixing the bottom rail and the top rail to each other at longitudinal central sections of the rails, wherein the bottom rail and the top rail are formed to be continuous long extrusion molding members. Preferably, the top rail is fixed on top of the bottom rail with a top wall portion of the bottom rail inserted into a complementary bottom groove of the top rail.

In another preferable embodiment, the rubber seal, which is formed to be a continuous long member and comprising a main body having a bottom surface for providing a tight contact with the support panel, and a flanged protrusion extending in a vertical direction from a central part of a top surface, is attached to each rail by tightly engaging the flanged protrusion with a corresponding U-shaped grooved portion comprised along the whole longitudinal length of the rail, wherein the bottom surface of the rubber seal preferably is waved or ribbed.

In another preferable embodiment, the method further comprises: providing at least two columns and fixing the at least two columns by a first end to the floor or ground at a distance from each other; providing at least two load-bearing members and obliquely fixing each load-bearing member by one end to a second end of a corresponding column of the at least two columns; and providing at least three crossmembers and securing the crossmembers at a distance from each other on the at least two load-bearing members; arranging the bottom rails on the crossmembers at a cross-sectional direction to the length of the crossmembers and fixing the bottom rails to the crossmembers.

In another preferable embodiment, the method further comprises: providing a gutter adapted for collecting rainwater; providing gutter brackets and fixing the gutter brackets to a corresponding one of the load-bearing side members at the end by which the load-bearing side member is attached to the column; mounting the gutter to the gutter brackets fixed to the load-bearing side members, such that the gutter is provided at the edge where the columns connect with the load-bearing side members, at a cross-sectional direction to the length of the load-bearing side members. Preferably, the gutter bracket is provided with a C-shaped recess that fits a C-shaped wall portion comprised by the gutter.

In another preferable embodiment of the method, the provided support panels are made of cellular polycarbonate.

The present invention thus provides an advantageous solution for integration of solar panels on carports. The invention mainly improves two aspects: dimensional adjustment (width and length) and total watertightness.

Dimensions are exactly the main advantage of the system: one can adapt the dimension thanks to the sliding rails and to the mobile piece, and therefore adapt the position of the support to any PV panel. One can therefore use any panel on any carport roof.

Further, the solar panels advantageously are slidable on exes formed by the rails.

Also, most of the elements and particularly the solar panels can be installed directly on the floor, which makes the process of assembling easier.

The assembling approach is ultra-fast, with strong and reliable mounting system, and with no need to drill the frame, which is achieved by providing 100% watertight clamping of the polycarbonate panels between the rails provided with rubber sails under the solar panels. The gutter is further provided to collect rainwater. So, the entire solar panel roof structure is watertight with the solar panels superimposed on the roof of the carport.

Thus, the revolutionary aspect of the present invention consists in that it enables easy and fast movable installing of all types of PV panels, regardless of size, while maintaining a watertight seal.

These and other advantages and features of the present invention are described with specificity below.

### BRIEF DESCRIPTION OF THE DRAWINGS

The present invention will be described more fully hereinafter with reference to the accompanying drawings, in which prominent aspects and features of the invention are illustrated.
**Figure 1** is a perspective view of a system for installation of solar panels on carports according to one embodiment of the present invention, with the solar panels installed.
**Figure 2** is an exploded front view of the system as shown in **Figure 1****.**
**Figure 3** is an exploded side view of the system as shown in **Figure 1****.**
**Figure 4** shows an enlarged profile view of a gutter assembly installed on load-bearing side members in the system as shown in **Figure 1****.**

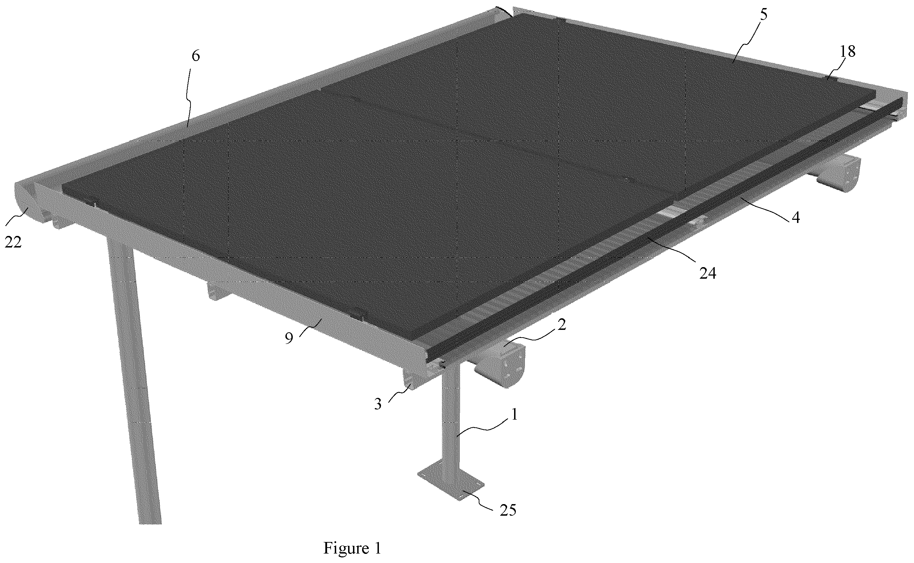

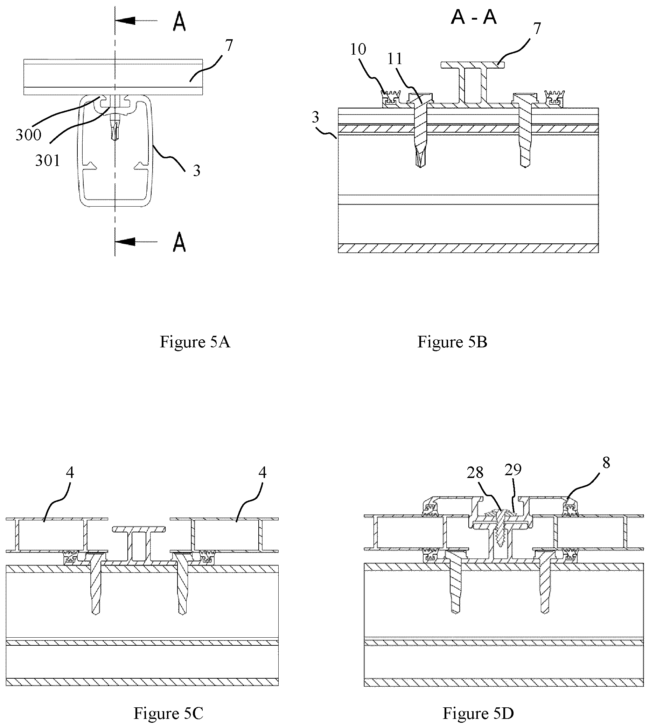

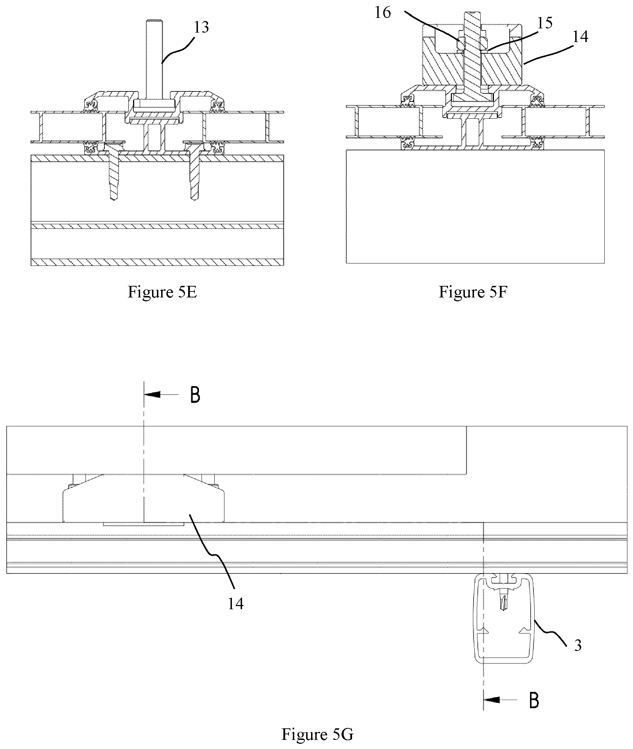

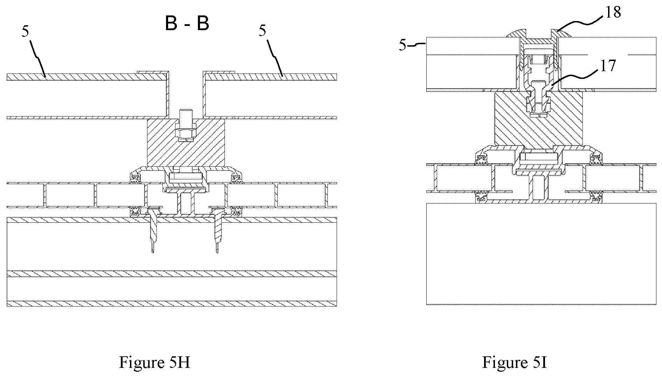

**Figures 5A-5I** show an example of the steps of installation of cellular polycarbonate panels and solar panels on crossmembers in the system as shown in **Figure 1****.** **Figure 5A** is a profile view of a crossmember with a bottom rail attached. **Figure 5A** is a profile view of a crossmember with a bottom rail attached. **Figure 5B** is a cross-sectional view A-A as indicated in **Figure 5A. Figure 5C** is a cross-sectional view of the assembly shown in **Figure 5B** with the cellular polycarbonate panels attached. **Figure 5D** is a cross-sectional view of the assembly shown in **Figure 5C** with a middle top rail attached. **Figure 5E** is a cross-sectional view of the assembly shown in **Figure 5D** with a hammer head screw attached. **Figure 5F** is a cross-sectional view of the assembly shown in **Figure 5E** with a solar panel fastening base member attached. **Figure 5G** is a side view of the assembly shown in **Figure 5F** with the solar panels attached. **Figure 5H** is a cross-sectional view B-B as indicated in **Figure 5G****.** **Figure 5I** is a cross-sectional view of the assembly shown in **Figure 5H** with a clamp assembly attached.
**Figure 6** shows a perspective view of an assembly of solar panel mounting rails, cellular polycarbonate panels and solar panels as part of the system as shown in **Figure 1****.**

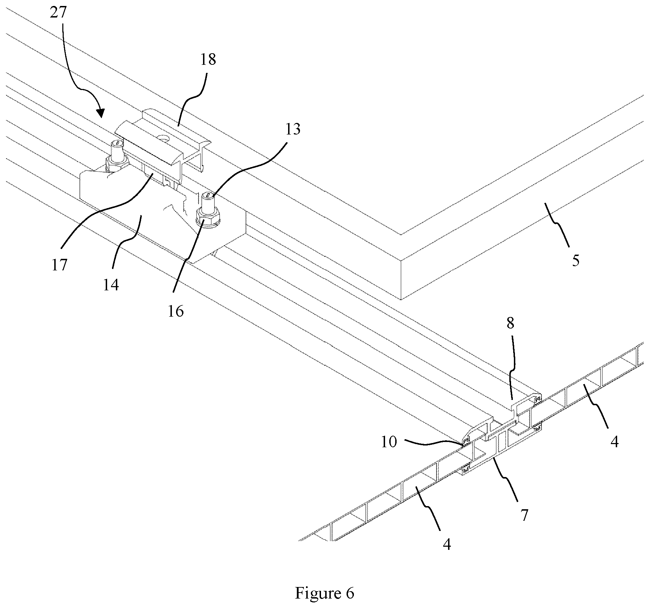

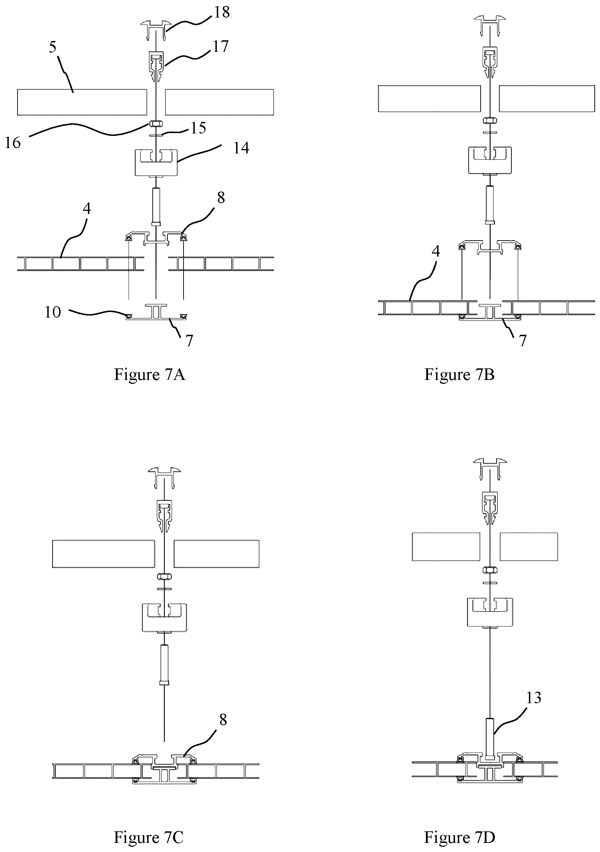

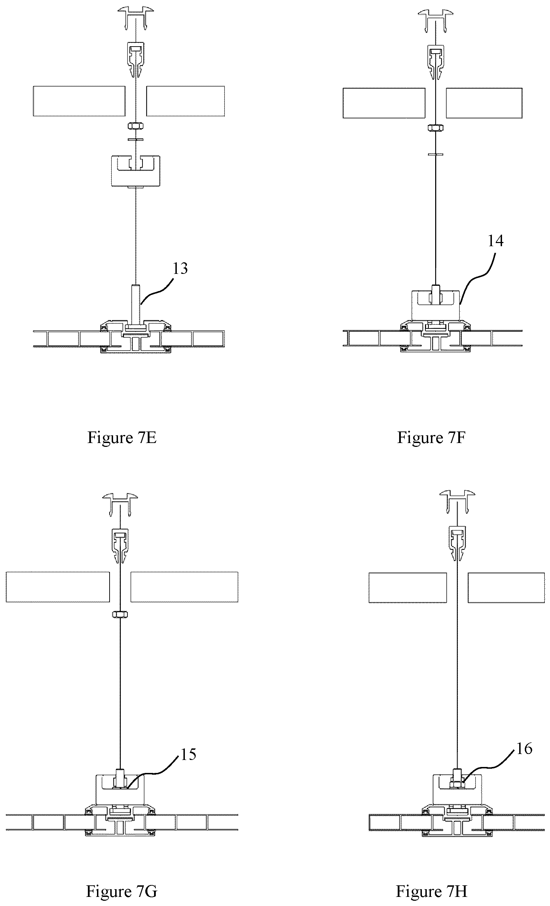

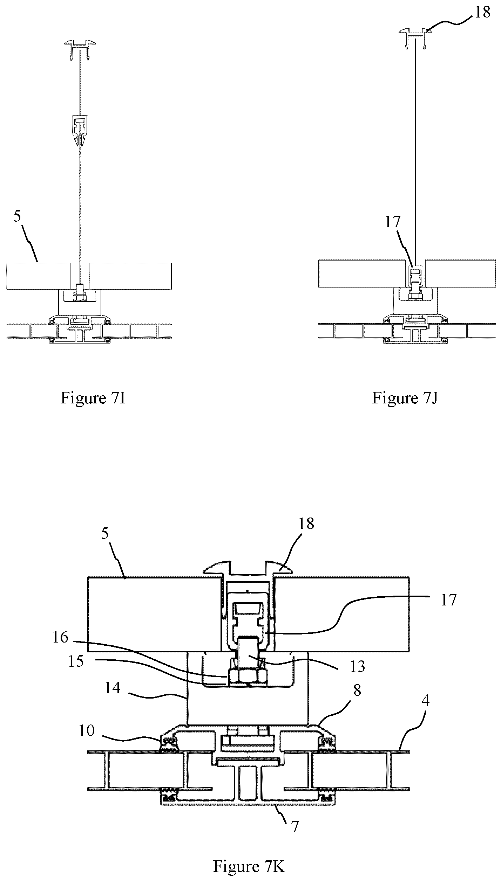

**Figures 7A-7K** are exploded views showing an example of the steps of assembling the solar panel mounting rails, cellular polycarbonate panels and solar panels to provide the assembly as shown in **Figure 6****.** **Figure 7A** is an exploded view of the assembly shown in **Figure 6****.** **Figure 7B** is an exploded view of the assembly shown in **Figure 6** with the cellular polycarbonate panel attached to the bottom rail. **Figure 7C** is an exploded view of the assembly as shown in **Figure 7B** with the middle top rail attached. **Figure 7D** is an exploded view of the assembly as shown in **Figure 7C** with the hammer head screw inserted. **Figure 7E** is an exploded view of the assembly as shown in **Figure 7D** with the hammer head screw turned. **Figure 7F** is an exploded view of the assembly as shown in **Figure 7E** with the solar panel fastening base member attached. **Figure 7G** is an exploded view of the assembly as shown in **Figure 7F** with a washer attached. **Figure 7H** is an exploded view of the assembly as shown in **Figure 7G** with a nut attached. **Figure 7I** is an exploded view of the assembly as shown in **Figure 7H** with solar panels attached. **Figure 7J** is an exploded view of the assembly as shown in **Figure 7I** with a fastening clip attached. **Figure 7K** is an exploded view of the assembly as shown in **Figure 7J** with a middle clamp attached.
**Figure 8** is a cross-sectional view of the gutter according to an embodiment shown in **Figure 4****.**
**Figures 9A-9E** show different views of an embodiment of a gutter bracket used for installation of the gutter as shown in **Figure 4****.** **Figure 9A** shows a bottom view of the gutter bracket. **Figure 9B** shows a front view of the gutter bracket. **Figure 9C** shows a cross-sectional view C-C as indicated in **Figure 9A**. **Figure 9D** shows a side view of the gutter bracket. **Figure 9E** shows a perspective view of the gutter bracket.
**Figure 10** is a cross-sectional view of an embodiment of a middle top rail of the system shown in **Figure 1****.**
**Figure 11** is a cross-sectional view of an embodiment of a bottom rail of the system shown in **Figure 1****.**
**Figure 12** is a cross-sectional view of an assembly of the middle top rail shown in **Figure 10** and the bottom rail shown in **Figure 11****.**
**Figure 13** is a cross-sectional view of an embodiment of an end top rail of the system shown in **Figure 1****.**
**Figure 14** is a cross-sectional view of an assembly of the end top rail shown in **Figure 13** and the bottom rail shown in **Figure 11****.**
**Figures 15A-15E** show different views of an embodiment of a solar panel fastening base member of the system as shown in **Figure 1****.** **Figure 15A** shows a side view of the solar panel fastening base member. **Figure 15B** shows a cross-sectional view D-D as indicated in **Figure 15A**. **Figure 15C** shows a top view of the solar panel fastening base member. **Figure 15D** shows a rear view of the solar panel fastening base member. **Figure 15E** shows a perspective view of the solar panel fastening base member.
**Figure 16** is a profile view of an embodiment of a rubber seal of the system as shown in **Figure 1****.**
**Figure 17** shows a perspective view of an embodiment of an assembly of a middle clamp with a fastening clip, which is used in the system as shown in **Figure 1****.**
**Figure 18** shows a perspective view of an embodiment of an assembly of an end clamp with a fastening clip, which is used in the system as shown in **Figure 1****.**

The present figures relate to schematic drawings so that any dimension of the elements shown in the drawings may deviate from a specifically implemented setup. Furthermore, elements that are known to be common and well understood to those in the industry are not depicted in order to provide a clear view of the various embodiments of the present invention.

### DETAILED DESCRIPTION

In the following discussion that addresses a number of embodiments and applications of the present invention, reference is made to the accompanying drawings that form a part hereof, and in which is shown by way of illustration of specific embodiments in which the invention may be practiced. It is to be understood that other embodiments may be utilized and changes may be made without departing from the scope of the present invention.

Various inventive features are described below that can each be used independently of one another or in combination with other features. However, any single inventive feature may not address any of the problems discussed above or only address one of the problems discussed above. Further, one or more of the problems discussed above may not be fully addressed by any of the features described below.

Where the present description refers to "preferred" embodiments/features, combinations of these "preferred" embodiments/features shall also be deemed as disclosed as long as this combination of "preferred" embodiments/features is technically meaningful.

The following definitions are to be used to interpret the meaning of the terms discussed in the description and recited in the claims. The term "substantially perpendicularly" refers to a possibility of deviating not more than 10° from perpendicular alignment. The term "substantially rectangular" refers to a possibility of deviating not more than 10° from parallel alignment of opposite sides of the rectangular shape.

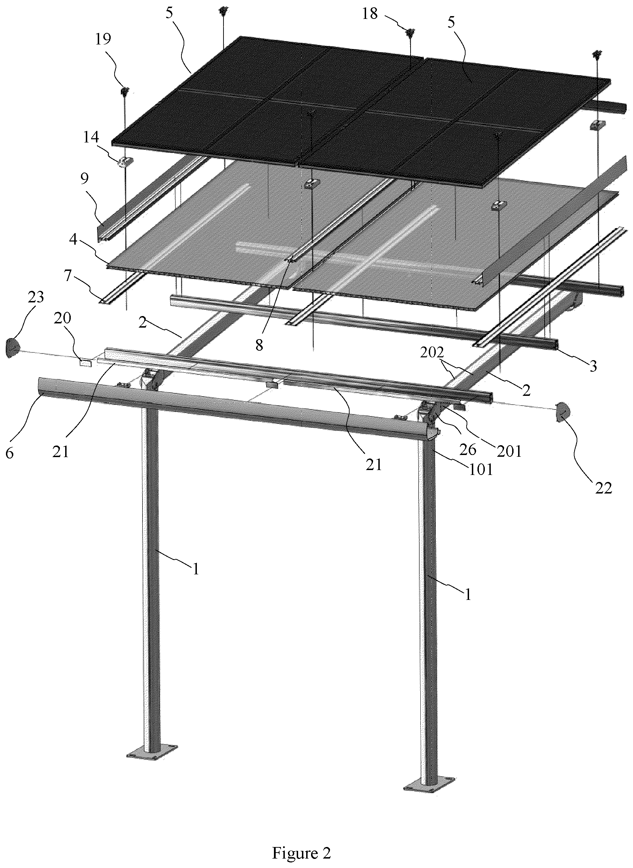

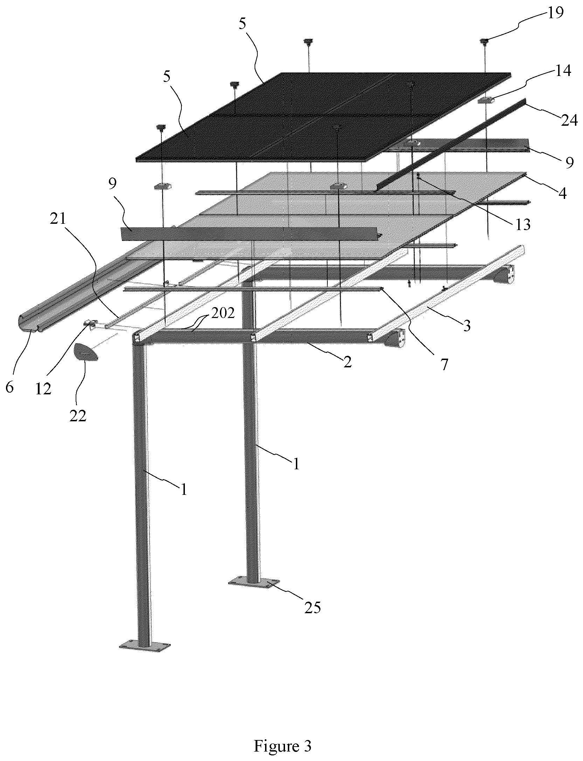

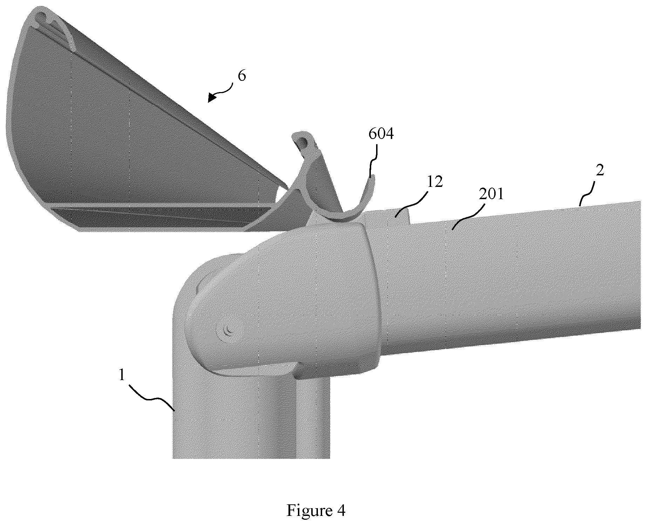

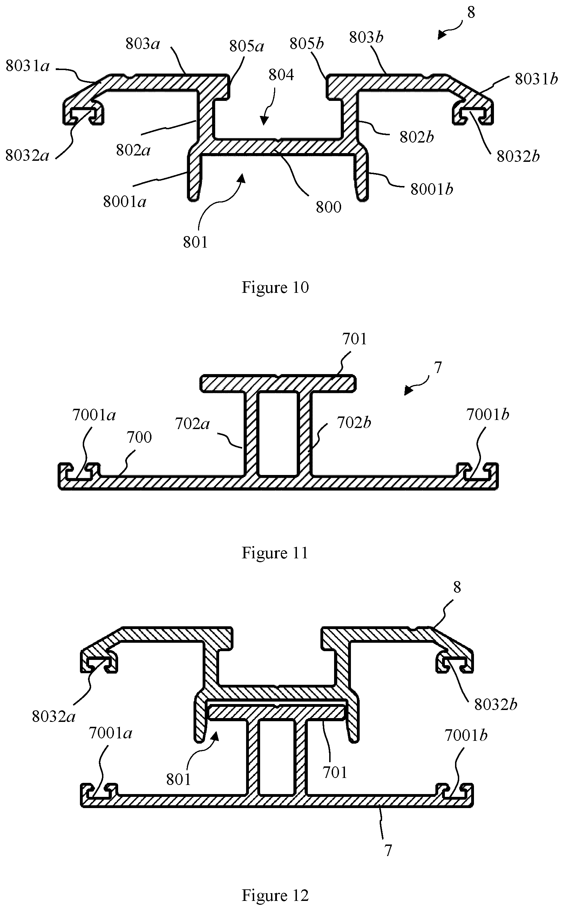

Turning now to **Figure 1****,** a perspective view of a system for installation of photovoltaic (PV) panels (hereinafter - solar panels) 5 on a carport structure according to one of preferred embodiments of the present invention is illustrated. As shown in exploded views in **Figures 2** and **3****,** the system comprises two spaced columns 1, two load-bearing side members 2 attached to the columns 1, three crossmembers 3 arranged on the load-bearing side members 2, a gutter 6 mounted to the load-bearing side members 2 (as shown in **Figure 4****),** three rail assemblies of top and bottom rails 7, 8, 9 (as shown in **Figures 10-14****)** with two support panels 4 clamped therebetween (as shown in **Figure 6****),** and two solar panels 5 movably attached to the top rails 8, 9 above the support panels 4 preferably made of cellular polycarbonate (as shown in **Figure 6****).**

Two columns 1, two load-bearing members 2 and three crossmembers 3 can be optimal minimum number of basic structure members to provide a support for mounting two solar panels and corresponding two cellular polycarbonate support panels 4. However, the number of columns 1, load-bearing members 2 and/or crossmembers 3 can be increased depending on the size and number of solar panels 5 to be mounted. The number of cellular polycarbonate support panels 4 is taken equal to the number of the solar panels 5 to be mounted. The number of assemblies of top and bottom rails 7, 8, 9 is adopted to the number of the solar panels 5 to be mounted.

The columns 1 are fixed to the ground or floor and each of the load-bearing side members 2 is obliquely fixed by one of its ends 201 to a free end 101 of a corresponding one of the columns 1. Each of the columns 2 can be formed to be a continuous long member having the same cross-sectional shape at any places with a joint plate 25 provided at one end for mounting the column 1 to the ground. The column 1 can be made of a metal such as aluminum with a substantially rectangular hollow profile with a rectangular joint plate 25 welded to one end, as shown in **Figures 2** and **3****.** Each of the load-bearing side members 2 is formed to be a continuous long member having the same cross-sectional shape at any places and can be made of a metal such as aluminum with a substantially rectangular hollow profile with two vertically oriented flanges 202 extending along the whole length of the long member from two opposite ends of a horizontally oriented top wall. The columns 1 and the load-bearing side members 2 profiles can be formed by extrusion molding.

The crossmembers 3 are spaced and secured on the load-bearing side members 2 perpendicularly to the length of the load-bearing side members 2 to provide a support to the assembly of rails 7, 8, 9, cellular polycarbonate support panels 4 and solar panels 5. The crossmember 3 is formed to be a continuous long member having the same cross-sectional shape at any places and can be an extrusion molding member made of a metal such as aluminum, having a substantially rectangular profile with a groove 301 provided along a top surface 300 of a top wall of the four walls formed by the rectangular profile for screwing the assembly of rails 7, 8, 9, cellular polycarbonate support panels 4 and solar panels 5 thereto (see **Figure 5A** that illustrates a profile view of the crossmember 3 with a bottom rail 7 screwed thereto).

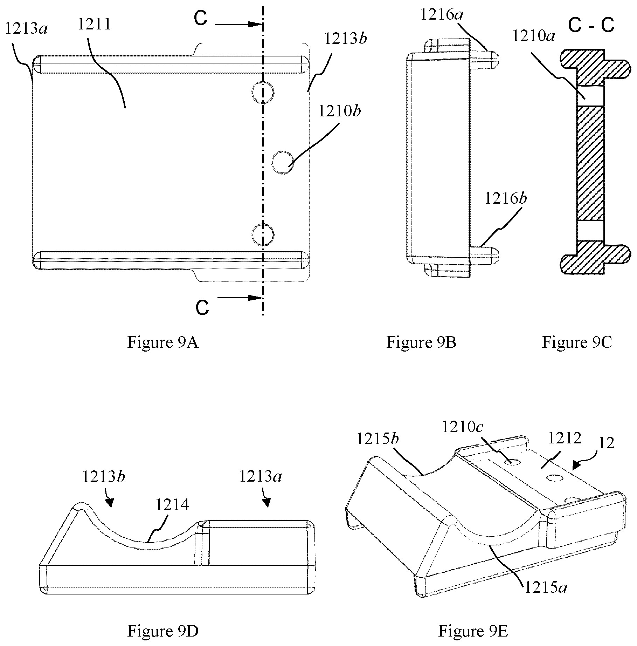

The gutter 6 is provided in the system to guide rainwater. The gutter 6 is mounted to the load-bearing side members 2 using gutter brackets 12. As shown in **Figures 2****,** **3** and **4****,** each gutter bracket 12 is fixed to a corresponding one of the load-bearing side members 2 at the end 201 by which the load-bearing side member 2 is attached to the column 1. One of preferrable embodiments of the gutter bracket 12 is illustrated in **Figures 9A-9E****.** Three holes 1210*a*, 1210*b,* 1210*c* are provided from the bottom surface 1211 to the top surface 1212 of the gutter bracket 12 in a back end 1213*a* portion of the gutter bracket 12 for fixing, using screws (not shown), to the load-bearing side member 2. The front end 1213*b* portion of the gutter bracket 12 is provided with a C-shaped recess 1214 extending from one side wall 1215*a* to an opposite side wall 1215*b* of the gutter bracket 12 for receiving a gutter 6. The gutter bracket 12 has two spaced protrusions 1216*a*, 1216*b* extending from the back end 1213*a* to the front end 1213*b* to fit between the flanges 202 provided on the top wall of the load-bearing side member 2.

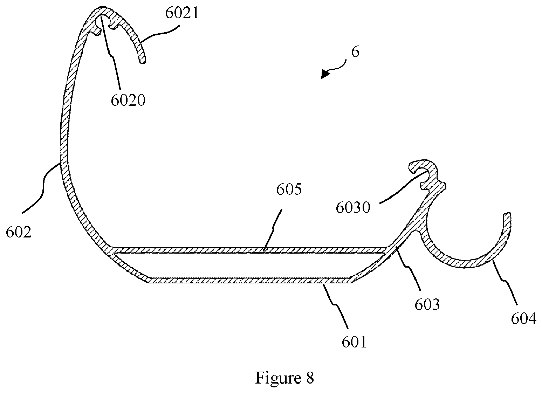

**Figure 8** illustrates a cross-sectional view of the gutter 6 according to a preferrable embodiment of the present invention. The gutter 6 is formed to be a continuous long extrusion molding member made of a metal such as aluminum and having the same cross-sectional shape at any places. The gutter 6 comprises a flat bottom wall portion 601, a first side wall portion 602, a second side wall portion 603 and a C-shaped wall portion 604. The first side wall portion 602 extends in a vertical direction from one long edge of the horizontally extending bottom wall portion 601, and the second side wall portion 603 extends in a vertical direction from an opposite long edge of the bottom wall portion 601 so as to form a gutter 6. The first side wall portion 602 has a convex shape and is provided with a flange 6021 directed inside the gutter 6. In addition, a C-shaped grooved portion 6020 is formed along an inner edge between the first side wall portion 602 and the flange 6021 to strengthen the profile. The second side wall portion 603 also has a convex shape and is shorter than the first side wall portion 602 and preferably extends no more than to the middle of the height of the first side wall portion 602. In addition, the second side wall portion 603 includes a C-shaped grooved portion 6030 arranged along a free edge of the second side wall 603 to strengthen the profile. The C-shaped wall portion 604 extends outside from the free edge of the second side wall portion 603, preferably so that a plane of the lowest bottom point of the C-shaped wall portion 604 is higher than the plane of the bottom wall portion 601. The C-shaped wall portion 604 fits the C-shaped recess in the gutter brackets 12 and is fixed in the same for mounting to the load-bearing side members 2, as shown in **Figure 4****.** In addition, the profile of the gutter 6 is strengthened by including an internal wall portion 605 extending in a horizonal direction above and parallel to the bottom wall portion 601 to connect the first side wall portion 602 and the second side wall portion 603.

Turning to **Figures 10-14****,** the system includes two types of assemblies of top and bottom rails 7, 8, 9. The first type of rail assembly is an intermediate rail assembly that includes two mating parts, a bottom rail 7 and a middle top rail 8, and rubber seals 10 attached to the rails 7, 8 along rail longitudinal lengths. The second type of rail assembly is an end rail assembly that includes two mating parts, a bottom rail 7 and an end top rail 8, and rubber seals 10 attached to the rails 7, 9 along rail longitudinal lengths. The profile of the end top rail 9 differs from the profile of the middle top rail 8. The end top rail 9 only accommodates one solar panel 5, while the middle top rail 8 allows two solar panels 5 to be installed, one next to the other.

Thus, in the system as shown in **Figures 1-3****,** with the two solar panels 5 mounted, there are included one assembly of the bottom rail 7 and the middle top rail 8 to provide an intermediate rail between the two solar panels 5 with two adjacent cellular polycarbonate support panels 4 clamped between the bottom rail 7 and the middle top rail 8, and two assemblies of the bottom rail 7 and the end top rail 9 to provide corresponding two end rails each guiding a free end of one of the two solar panels 5 with a free end of one of the two cellular polycarbonate support panels 4 clamped between the bottom rail 7 and the end top rail 9. With the number of solar panels 5 increasing, additional intermediate rail assemblies will be necessary. For example, when the number of solar panels 5 is three, one additional intermediate rail assembly will be included to provide two intermediate rail assemblies.

**Figure 11** illustrates a cross-sectional view of a bottom rail 7 according to a preferrable embodiment. The bottom rail 7 is formed to be a continuous long extrusion molding member made of a metal such as aluminum and having the same cross-sectional shape at any places. The bottom rail 7 is symmetrical in a cross-sectional direction along an imaginary vertical axis and comprises a horizontally oriented flat bottom wall portion 700, a horizontally oriented flat top wall portion 701, and two vertically oriented, spaced and parallel flat bridging wall portions 702*a*, 702*b* positioned between the bottom wall portion 700 and the top wall portion 701 to connect centers of the bottom wall portion 700 and the top wall portion 701. The top wall portion 701 is shorter than the bottom wall portion 700 in the cross-sectional direction. The bottom wall portion 700 comprises two protruding U-shaped grooved portions 7001*a*, 7001*b* each arranged on an inner surface of the bottom wall portion 700 at one of two opposite longitudinal ends of the bottom wall portion 700.

The bottom rail 7 is arranged substantially perpendicularly to the crossmembers 3 (as shown in **Figures 2** and **3****)** by securing the bottom wall portion 700 to each of the crossmembers 3 using bottom rail fixing screws 11. Particularly, two bottom rail fixing screws 11 penetrate through the inner surface of the bottom wall portion 700 each between one of the U-shaped grooved portions 7001*a*, 7001*b* and one of the bridging wall portions 702a, 702b and through the surface of the groove 301 of each crossmember 3, as shown in **Figures 5A** and **5B****.**

**Figure 10** illustrates a cross-sectional view of a middle top rail 8 according to a preferrable embodiment. The middle top rail 8 is formed to be a continuous long extrusion molding member made of a metal such as aluminum and having the same cross-sectional shape at any places. The middle top rail 8 is symmetrical in a cross-sectional direction along an imaginary vertical axis and comprises a horizontally oriented flat bottom wall portion 800 with two vertically oriented flanges 8001*a*, 8001*b* each protruding from a bottom surface of the bottom wall portion 800 at one of two opposite longitudinal ends of the bottom wall portion 800, two horizontally oriented flat top wall portions 803*a*, 803*b* each having at a first longitudinal end a flange 8031*a*, 8031*b* inclined in direction of the bottom wall portion 800, and two vertically oriented spaced and parallel bridging walls 802*a*, 802*b* each extending from a top surface of the bottom wall portion 800 at a corresponding one of two opposite longitudinal ends of the bottom wall portion 800 to connect with a second longitudinal end of a corresponding one of the top wall portions 803*a*, 803*b*. Each flange 8031*a*, 8031*b* of the bottom wall portion 800 comprises, at a bottom surface of its free end, a horizontally oriented U-shaped grooved portion 8032*a*, 8032*b*. In addition, a horizontally oriented protrusion 805*a*, 805*b* extends from the second longitudinal end of each top wall portion 803*a*, 803*b* as a continuation of the top wall portion 803*a*, 803*b*. A U-shaped top groove 804 is thus formed between the top wall portions 803*a*, 803*b* by the bottom wall portion 800, the bridging walls 802*a*, 802*b* and the protrusions 805*a*, 805*b*, and a bottom groove 801 is thus formed by the bottom wall portion 800 and the flanges 8001*a*, 8001*b* of the bottom wall portion 800. A width of the bottom groove 801 formed by the distance between the flanges 8001*a*, 8001*b* fits the width of the top wall portion 701 of the bottom rail 7 in the cross-sectional direction.

**Figure 12** illustrates an assembly of the bottom rail 7 shown in **Figure 11** and the matin middle top rail 8 shown in **Figure 10****.** When assembled, the bottom rail 7 and the middle top rail 8 are fixed to each other by their longitudinal central sections. Particularly, the middle top rail 8 is arranged on top of the bottom rail 7 with the top wall portion 701 of the bottom rail 7 inserted into the complementary bottom groove 801 of the middle top rail 8, and the U-shaped grooved portions 8032*a*, 8032*b* of the middle top rail 8 are directly above the grooved portions 7001*a*, 7001*b* of the bottom rail 7 at the distance fitting the width of cellular polycarbonate panels 4 which are clamped therebetween.

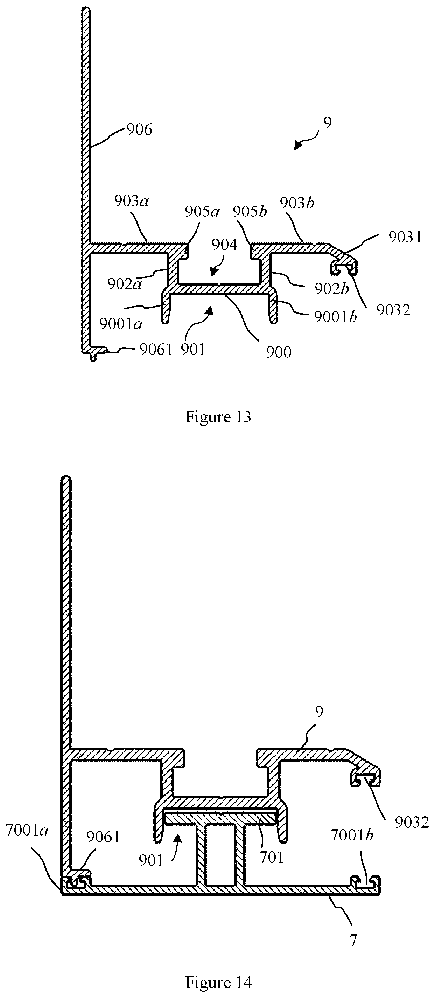

**Figure 13** illustrates a cross-sectional view of an end top rail 9 according to a preferrable embodiment. The end top rail 9 is formed to be a continuous long extrusion molding member made of a metal such as aluminum and having the same cross-sectional shape at any places. The end top rail 9 is similar to the middle top rail 8 and comprises a horizontally oriented flat bottom wall portion 900 with two vertically oriented flanges 9001*a*, 9001*b* each protruding from a bottom surface of the bottom wall portion 900 at one of two opposite longitudinal ends of the bottom wall portion 900, two horizontally oriented flat top wall portions 903*a*, 903*b* and two vertically oriented spaced and parallel bridging walls 902*a*, 902*b* each extending from a top surface of the bottom wall portion 900 at a corresponding one of two opposite longitudinal ends of the bottom wall portion 900 to connect with a second longitudinal end of a corresponding one of the top wall portions 903*a*, 903*b*. A horizontally oriented protrusion 905*a*, 905*b* extends from the second longitudinal end of each top wall portion 903*a*, 903*b* as a continuation of the top wall portion 903*a*, 903*b*. A U-shaped top groove 904 is thus formed between the top wall portions 903*a*, 903*b* by the bottom wall portion 900, the bridging walls 902*a*, 902*b* and the protrusions 905*a*, 905*b*, and a bottom groove 901 is thus formed by the bottom wall portion 900 and the flanges 9001*a*, 9001*b* of the bottom wall portion 900. A width of the bottom groove 901 formed by the distance between the flanges 9001*a*, 9001*b* fits the width of the top wall portion 701 of the bottom rail 7 in the cross-sectional direction.

The end top rail 9 differs from the middle top rail 8 in that only one of the two top wall portions 903*a*, 903*b* has at its first longitudinal end a flange 9031 inclined in direction of the bottom wall portion 900 and comprising at a bottom surface of its free end a horizontally oriented U-shaped grooved portion 9032. The other one of the two top wall portions 903*a*, 903*b* connects by its first longitudinal end to a vertically oriented covering wall portion 906 extending up and down from the top wall portion 903*a* to have sufficient length to cover a corresponding edge of an assembly of cellular polycarbonate support panels 4 and solar panels 5 when installed in the system. The covering wall portion 906 comprises an engagement portion 9061 at its bottom end for connecting with a corresponding one of the U-shaped grooved portions 7001*a*, 7001*b* of the bottom rail 7.

**Figure 14** illustrates an assembly of the bottom rail 7 and the end top rail 9. When assembled, the bottom rail 7 and the end top rail 9 are fixed to each other by their longitudinal central sections. Particularly, the end top rail 9 is arranged on top of the bottom rail 7 with the top wall portion 701 of the bottom rail 7 inserted into the complementary bottom groove 901 of the end top rail 9, the engagement portion 9061 of the covering wall portion 906 is inserted into a corresponding one of the U-shaped grooved portions 7001*a*, 7001*b* of the bottom rail 7 and another one of the U-shaped grooved portions 7001a, 7001*b* of the bottom rail 7 is directly above the U-shaped grooved portion 9032 of the end top rail 9 at the distance fitting the width of a cellular polycarbonate support panel 4 clamped therebetween.

In the preferable embodiment, the U-shaped grooved portions 7001*a*, 7001*b,* 8032*a*, 8032*b* and 9032 of the bottom rail 7, middle top rail 8 and end top rail 9 have equal size and shape to receive the rubber seals 10 of equal size and shape (see **Figures 5I****,** **6****,** **7K****)** in order to reliably clamp cellular polycarbonate support panels 4 avoiding damaging and slipping of the polycarbonate support panels 4 between the rails and providing a waterproof sealing between the bottom and top rails 7, 8, 9 and the polycarbonate support panels 4.

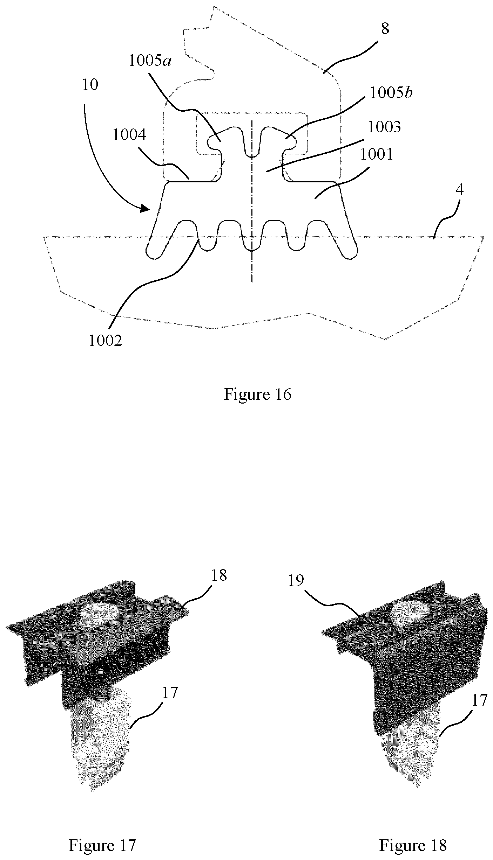

The rubber seal 10 is formed to be a continuous long member having the same cross-sectional shape at any places. As illustrated in **Figure 16****,** in a preferrable embodiment, the rubber seal 10 is symmetrical in a cross-sectional direction along an imaginary vertical axis and comprises a main body 1001 having a waved (or ribbed) bottom surface 1002 and a flanged protrusion 1003 extending in a vertical direction from a central part of a top surface 1004. The flanged protrusion 1003 comprises two flanges extending to the right and to the left from a free end of the protrusion 1003 in a cross-sectional direction for engaging with a corresponding U-shaped grooved portion 7001*a*, 7001*b,* 8032*a*, 8032*b* or 9032 of the bottom rail 7, middle top rail 8 or end top rail 9. The width of the protrusion 1003 in a cross-sectional direction can be slightly greater than the width of an entrance of the U-shaped grooved portion 7001*a*, 7001*b,* 8032*a*, 8032*b*, 9032 so as to be inserted with force and tightly fit the U-shaped grooved portion 7001*a*, 7001*b,* 8032*a*, 8032*b*, 9032. Ribs or waves of the bottom surface 1002 maximize interaction with the polycarbonate support panel 4 surface.

The solar panels 5 are movably installed on the rail assembly to slide above the polycarbonate support panels 4 with the help of solar panel fastening assemblies 27 (see **Figure 6****).** In a preferrable embodiment, each solar panel fastening assembly 27 comprises: a solar panel fastening base member 14, two hammer head screws 13 slidably fitting into the U-shaped top groove 804, 904 of any of the middle and end top rails 8, 9, two washers 15 and two nuts 16 securing the hammer head screws 13 to the solar panel fastening base member 14; and a fastening clip 17 and a suitable one of a middle clamp 18 and an end clamp 19 engaging with the fastening base member 14 and clamping the solar panel 5 between the fastening base member 14 and the middle/end clamp 18, 19.

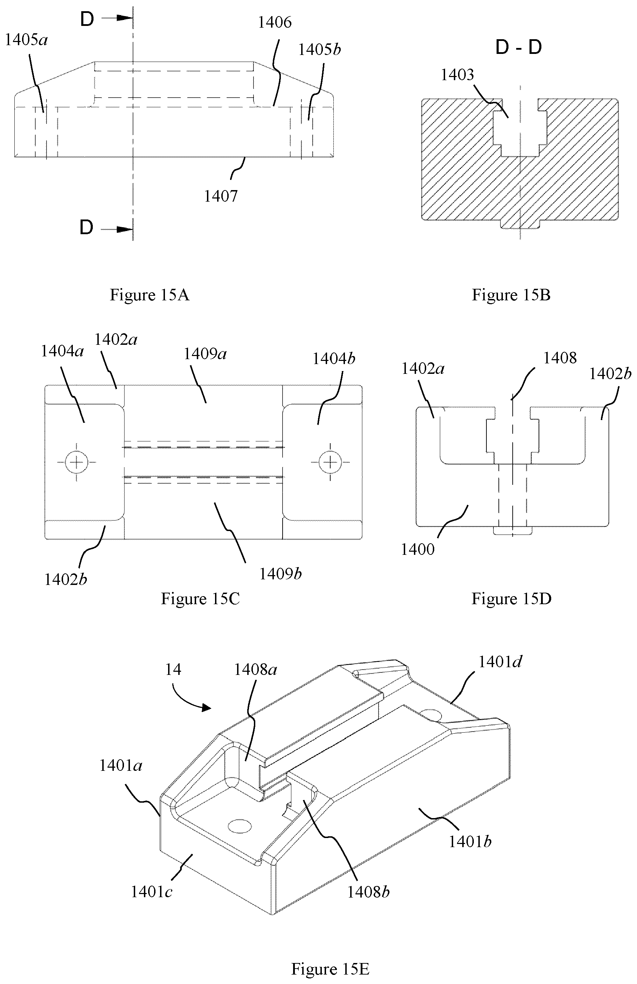

In the preferrable embodiment shown in **Figures 15A-15E****,** the solar panel fastening base member 14 is a symmetrical piece in both longitudinal and cross-sectional directions, which comprises a base portion 1400 with rectangular side walls 1401*a*, 1401*b,* 1401*c*, 1401*d* and two top side wall portions 1402*a*, 1402*b*, a top central grooved channel 1403 for receiving a fastening clip 17, and two holes 1405*a*, 1405*b* for receiving a hammerhead screw 13. The top side wall portions 1402*a*, 1402*b* extend upwards as continuation of two opposite elongated side walls 1401*a*, 1401*b* of the base portion 1400. Each top side wall portion 1402*a*, 1402*b* has a thick section 1408*a*, 1408*b* protruding in a central section of the base portion 1400 in a cross-sectional direction to each other so that the grooved channel 1403 is formed between the thick sections 1408*a*, 1408*b* along a central longitudinal axis of the base portion 1400. Each of two end sections 1404*a*, 1404*b* of the base portion 1400, which are opposite to each other in a longitudinal direction and are free of the central thick sections 1408*a*, 1408*b*, is provided with the hole 1405*a*, 1405*b* penetrating through the base portion 1400 from a top surface 1406 to a bottom surface 1407 and positioned along a central longitudinal axis 1408 of the base portion 1400.

A threaded portion of each of the two hammer head screws 13 penetrates through a corresponding hole 1405*a*, 1405*b* provided in the base portion 1400 of the fastening base member 14 with the hammer head portion resting under the bottom surface 1407 of the fastening base member 14 and in the U-shaped top groove 804, 904 of one of the middle and end top rails 8, 9. The nut 16 is fit onto the threaded portion of the screw 13 coming from the top surface 1406 of the base portion 1400 of the fastening base member 14 with the washer 15 installed therebetween. The fastening clip 17 securely engages with the grooved channel 1403 of the fastening base member 14 and a suitable one of the middle clamp 18 and the end clamp 19 is fixed on the fastening clip 17 (see **Figures 5E-5I**, **6** and **7D-7K**).

The middle clamp 18 is configured for clamping two solar panels 5 from both sides of the solar panel fastening assembly 27 and is provided in an intermediate solar panel fastening assembly which is installed on the corresponding intermediate rail assembly. The end clamp 19 is configured for clamping one solar panel 5 from one side of the solar panel fastening assembly 27 and is provided in an end solar panel fastening assembly which is installed on the end rail assembly. The end clamp 19 comprises a covering wall from the side that is not used for clamping the solar panel 5. Suitable pre-assemblies of the fastening clip 17 and middle or end clamp 18, 19 are available in the prior art. **Figure 17** illustrates an example of one particularly suitable pre-assembly of the fastening clip 17 with the middle clamp 18 as supplied by Schletter^{®}, and **Figure 18** illustrates an example of one particularly suitable pre-assembly of the fastening clip 17 with the end clamp 19 as supplied by Schletter^{®}.

Thus, in a preferable embodiment, the system comprises at least three rail assemblies two of which comprising the end top rail 9 and at least one of which comprising the middle top rail 8, at least two support panels 4, and at least three fastening assemblies corresponding to the number of the rail assemblies, two of the at least three fastening assemblies including the end clamp and at least one of which including the middle clamp.

To provide a finished appearance, the system can further comprise rail cover caps 20 to fit the ends of profiles of the rail assemblies, a cellular polycarbonate panel finishing aluminum U-profile 21 to fit front and rear ends of the cellular polycarbonate support panels 4, a right gutter cover cap 22 and a left gutter cover cap 23 to fit both ends of the gutter 6 profile, and a wall fleshing 24 fit between the end top solar rails 9 at the opposite end from the gutter 6.

The process of assembling of the system starts with assembling a basic structure. Particularly. the columns 1 are fixed to the ground at a distance from each other. Then, the load-bearing side members 2 are fixed to the columns 1, for example, by screwing using joints 26, to obtain a basic L-shaped support structure of a carport (see **Figures 2** and **3****).** Preferably, the load-bearing side members 2 are obliquely fixed to the columns 1 so that the free ends of the load-bearing side members 2 are at a higher level than the ends 201 connecting to the columns 1. This inclination ensures that the structure installed on the load-bearing side members 2 is declined in direction of the gutter 6 to let the rainwater to flow down into the gutter 6. After that, the crossmembers 3 are arranged at a distance from each other on the load-bearing side members 2 perpendicularly to the length of the load-bearing side members 2 and can be secured to the load-bearing side members 2, for example, by screws (see **Figures 2** and **3****).**

After assembling the basic structure, the gutter bracket 12 is fixed to each of the load-bearing side members 2 at an end 201 by which the load-bearing side member 2 connects to the column 1, by fitting the protrusions 1216a, 1216b of the gutter bracket 12 between the flanges 202 of the load-bearing side member 2 and screwing the gutter bracket 12 to the load-bearing side member 2 with three screws penetrating into corresponding three holes 1210 of the gutter bracket 12 (see **Figure 4****).** The gutter 6 is then engaged with the gutter brackets 12 by placing the C-shaped wall portion 604 in the corresponding C-shaped recess 1214 of each gutter bracket 12 and fixing the gutter 6 to the gutter brackets 12 (for example, by gluing), as shown in **Figure 4****.** After assembling, the gutter 6 is located at the edge where the column 1 connects with the load-bearing side member 2, perpendicularly to the length of the load-bearing side members 2.

After that, the rubber seals 10 are fit on the bottom rails 7, middle top rail(s) 8 and end top rails 9 by inserting the protrusion 1003 into the corresponding U-shaped grooved portions 7001*a*, 7001*b,* 8032*a*, 8032*b* or 9032.

At the next step, all exes where the rails will be positioned on the basic structure, are calculated based on the dimensions of the solar panels 5. The bottom rails 7 are then positioned substantially perpendicularly to all the crossmembers 3 (as shown in **Figures 2** and **3****)** on all the precalculated center-to-center distances and are fixed on each of the crossmembers 3 by securing the bottom wall portion 700 to each of the crossmembers 3 using two self-drilling screws 11, as shown in **Figures 5A** and **5B****.**

After fixing the bottom rails 7, the cellular polycarbonate support panels 4 are cut to correct dimensions according to the precalculated center-to-center distances for the rails and the required length. Then, a first cellular polycarbonate support panel 4 is laid along the first two bottom rails 7, as shown in **Figures 5C** and **7B****.**

At the next step, the first two suitable types of top rails are selected from the middle top rail 8 and the end top rail 9 and fit onto the corresponding two bottom rails 7 above the first cellular polycarbonate support panel 4 to clamp the first cellular polycarbonate support panel 4 between the top and bottom rails (see **Figures 5D** and **7C****).** Then, the top rails are screwed to the bottom rails 7 such that a screw 28 with a watertight washer 29 (as shown in **Figure 5D****)** penetrates through a center of the bottom wall portion 800, 900 of the top rail 8, 9 and the top wall portion 701 of the bottom rail 7 into the space between the bridging wall portions 702*a*, 702*b* of the bottom rail 7 to hold the two rails together. The mentioned process of installing the rail assemblies and each next cellular polycarbonate panel 4 is continued as explained above.

After installing all the rail assemblies with all the cellular polycarbonate support panels 4 clamped between the top and bottom rails, the solar panels 5 are movably installed on the top rails 8, 9, as shown in **Figure 6** using at least two solar panel fastening assemblies 27 for each top rail. For this purpose, at any step before installing the solar panels 5 on the top rails 8, 9, the solar panel fastening assemblies 27 can be partially pre-assembled on the ground for greater convenience.

To pre-assemble each solar panel fastening assembly 27, the two hammer head screws 13 are installed into the holes 1405a, 1405b provided in the base portion 1400 of the fastening base member 14, after which the washer 15 is installed onto the threaded portion of the hammer head screw 13 from above and the nut 16 is threaded onto the threaded portion of the hammer head screw 13 above the washer 15. After that, the fastening base member 14 pre-assembled with the screws 13 is placed on one of the top rails 8, 9 with the screws 13 inserted into the U-shaped top groove 804, 904 of the top rail 8, 9. It is necessary to turn the hammer head portion of the screws 13 a quarter turn so that the hammer head portion engages with the U-shaped top groove 804, 904 of the top rail 8, 9. To secure this position of the hammer head, the nut 16 should be screwed down on the threaded portion of each hammer head screw 13 until the screw 13 is fastened.

Alternatively to pre-assembling the fastening base member 14 with the screws 13, the two hammer head screws 13 can be first directly placed into the U-shaped top groove 804, 904 of the top rail 8, 9 first, as shown in **Figure 7D****,** turned a quarter turn to engage the hammer head portion with the U-shaped top groove 804, 904, as shown in **Figure 7E****,** and then installed into the holes 1405a, 1405b provided in the base portion 1400 of the fastening base member 14, as shown in **Figure 7F****,** with the washer 15 then installed onto the threaded portion of the hammer head screw 13 from above (as shown in **Figure 7G****)** and the nut 16 then threaded onto the threaded portion of the hammer head screw 13 above the washer 15 (as shown in **Figure 7H****).**

After pre-assembling the fastening base member 14 with the screws 13 and installing on the top rails 8, 9, or before installing on the top rails 8, 9, each solar panel 5 is placed between and onto two of the adjacent fastening base members 14 installed on the adjacent top rails 8, 9. Then, to secure the solar panels 5, the pre-assembly of the fastening clip 17 with a suitable one of the middle clamp 18 and the end clamp 19 (shown in **Figures 17****,** **18**) can be selected and inserted into the grooved channel 1403 of each fastening base member 14 until the fastening clip 17 engages with the grooved channel 1403 (see **Figures 5I**, **7K**). Alternatively, the fastening clip 17 and a suitable one of the middle clamp 18 and the end clamp 19 can be selected as separate pieces and the fastening clip 17 is inserted into the grooved channel 1403 of the fastening base member 14 until the fastening clip 17 engages with the grooved channel 1403 (see **Figure 7J****),** and the clamp 18 or 19 is further installed onto the fastening clip 17(see **Figure 7K****)** to clamp the solar panels 5. As a general rule, the type of the clamp - a middle clamp 18 or an end clamp 19 is adopted, which corresponds to the type of the top rail - a middle top rail 8 or an end top rail 9, respectively.

Once the entire solar panel roof structure has been installed, the front and rear ends of the cellular polycarbonate support panels 4 can be fitted with the finishing aluminum U-profile 21, and the cover caps 20 can be fitted with the ends of profiles of the rail assemblies. Also, the right gutter cover cap 22 and the left gutter cover cap 23 can be fitted with both ends of the gutter 6 profile, and the wall fleshing 24 can be fitted between the end top solar rails 9 at the opposite end from the gutter 6.

The above disclosed subject-matter is to be considered illustrative, and not restrictive, and serves to provide a better understanding of the present invention set out in the appended set of claims.

## Claims

1. A system for installing photovoltaic (PV) panels (5) on a support structure, the system comprising:
support panels (4),
rail assemblies attached to the support panels, and
fastening assemblies (27) for slidably installing of the PV panels to the rail assemblies, wherein:
each of the rail assemblies comprises a bottom rail (7) and a mating top rail (8, 9) fixed to the bottom rail (7), the rails being provided with rubber seals (10) along rail longitudinal lengths,
each of the support panels is tightly clamped by one end between the rubber seals (10) of the bottom rail and top rail of one rail assembly, and by an opposite end between the rubber seals of the bottom rail and top rail of another rail assembly, such that facing ends of each two adjacent support panels share the same rail assembly,
each of the fastening assemblies (27) comprises:
a fastening base member (14),
two hammer head screws (13) each secured to the fastening base member by a threaded portion and slidably engaging by a hammer head portion with a mating top longitudinal groove (804, 904) of a corresponding top rail,
a fastening clip (17) engaging with a mating grooved channel (1403) of the fastening base member, and
a mating clamp (18, 19) fixed on the fastening clip for clamping a PV panel at least from one longitudinal side of the clamp between the fastening base member and the clamp so that each PV panel fastened using the fastening assemblies is provided directly above each support panel.

2. The system according to claim 1, wherein:
the mating top rail is selected from a middle top rail (8) and an end top rail (9), the bottom rail and the middle top rail each being provided with two spaced rubber seals (10) that are attached along both longitudinal sides of the rail from a rail longitudinal central axis, and the end top rail being provided with one rubber seal (10) attached along one of two longitudinal sides of the end top rail from a rail longitudinal central axis,
each of the support panels is tightly clamped by the one end between one of the two rubber seals of the bottom rail and a corresponding one of the two rubber seals of the middle top rail of the one rail assembly, and by the opposite end between one of the two rubber seals of the bottom rail and the corresponding rubber seal of the middle top rail or the end top rail of said another rail assembly, wherein the facing ends of each two adjacent cellular polycarbonate panels are clamped between a corresponding one of two opposite rubber seals of the bottom rail and a corresponding one of two opposite rubber seals of the top rail of the same rail assembly.

3. The system according to claim 2, wherein the mating clamp is selected from a middle clamp (18) and an end clamp (19), the middle clamp configured for clamping two PV panels of the PV panels from both longitudinal sides of the middle clamp, and the end clamp configured for clamping one PV panel of the PV panels from one of the longitudinal sides of the end clamp.

4. The system according to any one of the preceding claims, wherein the bottom rail and the top rail are formed to be continuous long extrusion molding members fixed to each other by longitudinal central sections, and wherein preferably the top rail is fixed on top of the bottom rail with a top wall portion (701) of the bottom rail inserted into a complementary bottom groove (801, 901) of the top rail.

5. The system according to any one of the preceding claims, wherein each rubber seal is formed to be a continuous long member comprising a main body (1001) having a bottom surface (1002) that tightly contacts the support panel, and a flanged protrusion (1003) extending in a vertical direction from a central part of a top surface (1004) and tightly engaging with a corresponding U-shaped grooved portion (7001*a*, 7001*b,* 8032*a*, 8032*b* or 9032) comprised along the whole longitudinal length of the rail, wherein the bottom surface of the rubber seal preferably is waved or ribbed.

6. The system according to any one of the preceding claims, wherein the top longitudinal groove (804, 904) of each top rail is U-shaped and is formed from an upper side of the top rail along a longitudinal central axis of the top rail.

7. The system according to any one of the preceding claims, wherein the support structure is a carport, and the system further comprises at least two columns (1) to be fixed by a first end to the floor or ground at a distance from each other, at least two load-bearing members (2) each obliquely fixed by one end (201) to a second end (101) of the corresponding column, and at least three crossmembers (3) secured at a distance from each other on the at least two load-bearing members, wherein the bottom rails are arranged on the crossmembers at a cross-sectional direction to the length of the crossmembers and are fixed to the crossmembers.

8. The system according to claim 7, further comprising a gutter for collecting rainwater, which is mounted to the at least two load-bearing members using gutter brackets (12) each fixed to a corresponding one of the load-bearing side members at the end by which the load-bearing side member is attached to the column, such that the gutter is provided at the edge where the columns connect with the load-bearing side members, at a cross-sectional direction to the length of the load-bearing side members, wherein preferably the gutter bracket is provided with a C-shaped recess (1214) that fits a C-shaped wall portion (604) comprised by the gutter.

9. The system according to any one of the preceding claims, wherein the support panels are made of cellular polycarbonate.

10. A method of installing photovoltaic (PV) panels (5) on a support structure, comprising the following steps:
providing bottom rails (7) and mating top rails (8, 9) adapted for slidably installing of the PV panels thereon,
providing support panels (4),
providing fastening base members (14), hammer head screws (13), fastening clips (17) and clamps (18, 19) mating the fastening clips,
attaching rubber seals (10) to the bottom rails (7) and the top rails (8, 9) along rail longitudinal lengths,
tightly clamping each of the support panels by one end between the rubber seals of the bottom rail and the mating top rail forming one rail assembly, and by an opposite end between the rubber seals of the bottom rail and the mating top rail forming another rail assembly, such that facing ends of each two adjacent support panels share the same rail assembly,
securing two hammer head screws to each of the fastening base members by a threaded portion,
slidably engaging the two hammer head screws by a hammer head portion with a mating top longitudinal groove (804, 904) of a corresponding top rail,
engaging the fastening clip with a mating grooved channel (1403) of each of the fastening base members, and
clamping a PV panel at least from one longitudinal side of each clamp between the corresponding fastening base member and the clamp by fixing the clamp to the fastening clip, wherein each fastening base member with two hammer head screws, one fastening clip and one clamp attached to the fastening base member form a fastening assembly (27), and each PV panel fastened using the fastening assemblies is provided directly above each support panel.

11. The method according to claim 10, further comprising fixing the bottom rail and the top rail to each other at longitudinal central sections of the rails, wherein the bottom rail and the top rail are formed to be continuous long extrusion molding members, and wherein preferably the top rail is fixed on top of the bottom rail with a top wall portion (701) of the bottom rail inserted into a complementary bottom groove (801, 901) of the top rail.

12. The method according to claim 10 or 11, wherein the rubber seal, which is formed to be a continuous long member and comprising a main body (1001) having a bottom surface (1002) for providing a tight contact with the support panel, and a flanged protrusion (1003) extending in a vertical direction from a central part of a top surface (1004), is attached to each rail by tightly engaging the flanged protrusion with a corresponding U-shaped grooved portion (7001*a*, 7001*b,* 8032*a*, 8032*b* or 9032) comprised along the whole longitudinal length of the rail, wherein the bottom surface of the rubber seal preferably is waved or ribbed.

13. The method according to any one of claims 10-12, wherein the method further comprises:
providing at least two columns (1) and fixing the at least two columns by a first end to the floor or ground at a distance from each other,
providing at least two load-bearing members (2) and obliquely fixing each load-bearing member by one end (201) to a second end (101) of a corresponding column of the at least two columns, and
providing at least three crossmembers (3) and securing the crossmembers at a distance from each other on the at least two load-bearing members,
arranging the bottom rails on the crossmembers at a cross-sectional direction to the length of the crossmembers and fixing the bottom rails to the crossmembers.

14. The method according to claim 13, further comprising:
providing a gutter adapted for collecting rainwater,
providing gutter brackets (12) and fixing the gutter brackets to a corresponding one of the load-bearing side members at the end by which the load-bearing side member is attached to the column,
mounting the gutter to the gutter brackets fixed to the load-bearing side members, such that the gutter is provided at the edge where the columns connect with the load-bearing side members, at a cross-sectional direction to the length of the load-bearing side members,
wherein preferably the gutter bracket is provided with a C-shaped recess (1214) that fits a C-shaped wall portion (604) comprised by the gutter.

15. The method according to any one of claims 10-14, wherein the provided support panels are made of cellular polycarbonate.

## Patentansprüche

1. Ein System zur Montage von Photovoltaik (PV)-Modulen (5) auf einer Tragkonstruktion, wobei das System Folgendes umfasst:
Trägerplatten (4),
Schienenbaugruppen, die an den Trägerplatten befestigt sind, und
Befestigungsbaugruppen (27) zur verschiebbaren Montage der PV-Module an den Schienenbaugruppen, wobei:
Jede der Schienenbaugruppen umfasst eine untere Schiene (7) und eine korrespondierende obere Schiene (8, 9), die an der unteren Schiene (7) befestigt ist; die Schienen sind entlang ihrer Längsrichtung mit Gummidichtungen (10) versehen,
Jede der Trägerplatten wird an einem Ende fest zwischen den Gummidichtungen (10) der unteren und der oberen Schiene einer Schienenbaugruppe eingeklemmt und am gegenüberliegenden Ende zwischen den Gummidichtungen der unteren und der oberen Schiene einer anderen Schienenbaugruppe eingeklemmt, sodass die gegenüberliegenden Enden zweier benachbarter Trägerplatten dieselbe Schienenbaugruppe teilen,
Jede der Befestigungsbaugruppen (27) umfasst:
ein Befestigungsgrundteil (14),
zwei Hammerkopfschrauben (13), die jeweils durch einen Gewindeabschnitt am Befestigungsgrundteil befestigt sind und mit ihrem Hammerkopfteil gleitend in eine passende obere Längsnut (804, 904) der entsprechenden oberen Schiene eingreifen,
eine Befestigungsklammer (17), die mit einem passenden profilierten Kanal (1403) des Befestigungsgrundteils in Eingriff steht, und
eine passende Klemme (18, 19), die an der Befestigungsklammer befestigt ist, um ein PV-Modul wenigstens an einer Längsseite zwischen dem Befestigungsgrundteil und der Klemme zu klemmen, sodass jedes mittels der Befestigungsbaugruppen befestigte PV-Modul unmittelbar über jeder Trägerplatte angeordnet ist.

2. Das System nach Anspruch 1, wobei:
die passende obere Schiene ist entweder eine mittlere obere Schiene (8) oder eine Endschiene (9), wobei die untere Schiene und die mittlere obere Schiene jeweils mit zwei voneinander beabstandeten Gummidichtungen (10) versehen sind, die beidseitig entlang der Längsseiten der Schiene ausgehend von einer längsgerichteten Mittelachse angebracht sind, und die Endschiene mit einer Gummidichtung (10) versehen ist, die entlang einer der beiden Längsseiten der Endschiene ausgehend von einer längsgerichteten Mittelachse angebracht ist,
Jede der Trägerplatten wird an einem Ende fest zwischen einer der beiden Gummidichtungen der unteren Schiene und der entsprechenden einer der beiden Gummidichtungen der mittleren oberen Schiene derselben Schienenbaugruppe eingeklemmt und am gegenüberliegenden Ende zwischen einer der beiden Gummidichtungen der unteren Schiene und der entsprechenden Gummidichtung der mittleren oberen Schiene oder der Endschiene jener anderen Schienenbaugruppe eingeklemmt, wobei die gegenüberliegenden Enden jeweils zweier benachbarter Hohlkammer-Polycarbonatplatten zwischen einer entsprechenden der beiden gegenüberliegenden Gummidichtungen der unteren Schiene und einer entsprechenden der beiden gegenüberliegenden Gummidichtungen der oberen Schiene derselben Schienenbaugruppe geklemmt sind.

3. Das System nach Anspruch 2, wobei die passende Klemme entweder eine mittlere Klemme (18) oder eine Endklemme (19) ist, wobei die mittlere Klemme so ausgebildet ist, dass sie zwei PV-Module von beiden Längsseiten klemmt, und die Endklemme so ausgebildet ist, dass sie ein PV-Modul von einer der Längsseiten klemmt.

4. Das System nach einem der vorangegangenen Ansprüche, wobei die untere Schiene und die obere Schiene als durchgehende lange Extrusionsprofile ausgebildet sind, die durch längsseitige Mittelabschnitte miteinander verbunden sind, und wobei vorzugsweise die obere Schiene oben auf der unteren Schiene befestigt ist, wobei ein Oberwandabschnitt (701) der unteren Schiene in eine komplementäre untere Nut (801, 901) der oberen Schiene eingesetzt ist.

5. Das System gemäß einem der vorstehenden Ansprüche, wobei jede Gummidichtung als durchgehendes langes Bauteil ausgebildet ist und einen Hauptkörper (1001) mit einer Unterfläche (1002) aufweist, die die Trägerplatte dicht berührt, sowie einen Flanschvorsprung (1003), der von einem mittleren Bereich der Oberseite (1004) in vertikaler Richtung ausgeht und fest in eine entsprechende U-förmige Nut (7001a, 7001b, 8032a, *8032b* oder 9032) eingreift, die über die gesamte Längsrichtung der Schiene verläuft, wobei die Unterfläche der Gummidichtung vorzugsweise wellig oder gerippt ist.

6. Das System gemäß einem der vorstehenden Ansprüche, wobei die obere Längsnut (804, 904) jeder oberen Schiene U-förmig ist und von der Oberseite der oberen Schiene entlang einer längsgerichteten Mittelachse der Schiene ausgebildet ist.

7. Das System gemäß einem der vorstehenden Ansprüche, wobei die Tragkonstruktion ein Carport ist, und das System ferner mindestens zwei Säulen (1) aufweist, die mit einem ersten Ende in einem Abstand zueinander am Boden oder Untergrund befestigt werden, mindestens zwei Tragglieder (2), die jeweils mit einem Ende (201) schräg an einem zweiten Ende (101) der jeweiligen Säule befestigt sind, und mindestens drei Querträger (3), die in Abstand zueinander an den mindestens zwei Traggliedern befestigt sind, wobei die Unterschienen quer zur Längsrichtung der Querträger auf den Querträgern angeordnet und an diesen befestigt sind.

8. Das System gemäß Anspruch 7, ferner mit einer Rinne zum Sammeln von Regenwasser, die an den mindestens zwei Traggliedern mittels Rinnenhalterungen (12) angebracht ist, wobei jede Rinnenhalterung an dem Ende des jeweiligen Tragglieds befestigt ist, an dem das Tragglied an der Säule montiert wird, so dass die Rinne an der Kante angeordnet ist, an der die Säulen mit den Traggliedern verbunden sind, quer zur Längsrichtung der Tragglieder, wobei die Rinnenhalterung vorzugsweise mit einer C-förmigen Aussparung (1214) versehen ist, die zu einem C-förmigen Wandabschnitt (604) der Rinne passt.

9. Das System gemäß einem der vorstehenden Ansprüche, wobei die Trägerplatten aus Hohlkammer-Polycarbonat bestehen.

10. Verfahren zur Montage von Photovoltaik (PV)-Modulen (5) auf einer Tragkonstruktion, umfassend die folgenden Schritte:
bereitstellen von unteren Schienen (7) und passenden oberen Schienen (8, 9), die zum gleitenden Aufschieben der PV-Module darauf geeignet sind,
bereitstellen von Trägerplatten (4),
bereitstellen von Befestigungsgrundteilen (14), Hammerkopfschrauben (13), Befestigungsklammern (17) und Klemmen (18, 19), die zu den Befestigungsklammern passen,
anbringen von Gummidichtungen (10) an den unteren Schienen (7) und an den oberen Schienen (8, 9) entlang der Längsrichtung der Schienen,
jede der Trägerplatten an einem Ende fest zwischen den Gummidichtungen der unteren Schiene und der passenden oberen Schiene einer Schienenbaugruppe einklemmen und am gegenüberliegenden Ende zwischen den Gummidichtungen der unteren Schiene und der passenden oberen Schiene einer weiteren Schienenbaugruppe einklemmen, sodass die gegenüberliegenden Enden je zweier benachbarter Trägerplatten dieselbe Schienenbaugruppe teilen,
befestigen von zwei Hammerkopfschrauben an jedem der Befestigungsgrundteile mittels eines Gewindeteils,
die beiden Hammerkopfschrauben mit einem Hammerkopfteil gleitend in eine zugehörige obere Längsrille (804, 904) der entsprechenden oberen Schiene einführen,
eingreifen der Befestigungsklammer in einen passenden profilierten Kanal (1403) jedes der Befestigungsgrundteile, und
festklemmen eines PV-Moduls mindestens an einer Längsseite jeder Klemme zwischen dem entsprechenden Befestigungsgrundteil und der Klemme, indem die Klemme an der Befestigungsklammer fixiert wird, wobei jedes Befestigungsgrundteil mit zwei Hammerkopfschrauben, einer Befestigungsklammer und einer am Befestigungsgrundteil angebrachten Klemme eine Befestigungsbaugruppe (27) bildet, und jedes mittels der Befestigungsbaugruppen befestigte PV-Modul direkt oberhalb jeder Trägerplatte angeordnet ist.

11. Das Verfahren nach Anspruch 10, ferner mit dem Schritt, die untere Schiene und die obere Schiene an den längsseitigen Mittelabschnitten der Schienen miteinander zu befestigen, wobei die untere Schiene und die obere Schiene als durchgehende lange Extrusionsprofile ausgebildet sind, und wobei vorzugsweise die obere Schiene oben auf der unteren Schiene befestigt ist, wobei ein oberer Wandabschnitt (701) der unteren Schiene in eine komplementäre untere Nut (801, 901) der oberen Schiene eingesetzt ist.

12. Das Verfahren nach Anspruch 10 oder 11, wobei die Gummidichtung, die als durchgehendes langes Bauteil ausgebildet ist und einen Hauptkörper (1001) mit einer Unterfläche (1002) zur dichten Auflage an der Trägerplatte sowie einen Flanschvorsprung (1003), der von einem zentralen Teil einer Oberseite (1004) in vertikaler Richtung ausgeht, aufweist, an jeder Schiene dadurch befestigt ist, dass der Flanschvorsprung fest in einen entsprechenden U-förmigen Nutabschnitt (7001*a*, 7001*b,* 8032*a*, 8032*b* oder 9032) eingreift, der über die gesamte Längsrichtung der Schiene verläuft, wobei die Unterfläche der Gummidichtung vorzugsweise gewellt oder gerippt ist.

13. Verfahren gemäß irgendeinem der voranstehenden Ansprüche 10 bis 12, wobei das Verfahren weiterhin umfasst:
bereitstellen von mindestens zwei Säulen (1) und befestigen der mindestens zwei Säulen mit ihrem ersten Ende am Boden oder Untergrund in einem Abstand zueinander,
bereitstellen von mindestens zwei Traggliedern (2) und jedes Tragglied mit einem Ende (201) schräg an ein zweites Ende (101) der entsprechenden Säule der mindestens zwei Säulen befestigen, und
bereitstellen von mindestens drei Querträgern (3) und die Querträger in einem Abstand zueinander an den mindestens zwei Traggliedern befestigen,
anordnen der unteren Schienen quer zur Längsrichtung der Querträger auf den Querträgern und die unteren Schienen an den Querträgern befestigen.

14. Verfahren nach Anspruch 13, ferner umfassend:
bereitstellen einer Rinne zum Sammeln von Regenwasser,
bereitstellen von Rinnenhalterungen (12) und die Rinnenhalterungen an dem jeweiligen Tragglied an dessen Ende befestigen, an dem das Tragglied an der Säule befestigt ist,
montieren der Rinne an den an den Traggliedern befestigten Rinnenhalterungen, sodass die Rinne an der Kante angebracht ist, an der die Säulen mit den Traggliedern verbunden sind, quer zur Längsrichtung der Tragglieder,
wobei vorzugsweise die Rinnenhalterung mit einer C-förmigen Aussparung (1214) versehen ist, die zu einem C-förmigen Wandabschnitt (604) der Rinne passt.

15. Verfahren nach einem der Ansprüche 10-14, wobei die bereitgestellten Trägerplatten aus Hohlkammer-Polycarbonat bestehen.

## Revendications

1. Un système pour l'installation de panneaux photovoltaïques (PV) (5) sur une structure de support, le système comprenant :
panneaux porteurs (4),
ensembles de rails fixés aux panneaux porteurs, et
ensembles de fixation (27) pour l'installation coulissante des panneaux photovoltaïques (PV) sur les ensembles de rails, dans lesquels :
chacun des ensembles de rails comprend un rail inférieur (7) et un rail supérieur assorti (8, 9) fixé au rail inférieur (7), les rails étant pourvus de joints en caoutchouc (10) sur toute leur longueur longitudinale,
chaque panneau porteur est fermement serré, par une extrémité, entre les joints en caoutchouc (10) du rail inférieur et du rail supérieur d'un ensemble de rails, et, par l'extrémité opposée, entre les joints en caoutchouc du rail inférieur et du rail supérieur d'un autre ensemble de rails, de sorte que les extrémités en vis-à-vis de chaque paire de panneaux porteurs adjacents partagent le même assemblage de rails,
chacun des ensembles de fixation (27) comprend :
un élément de base de fixation (14),
deux vis à tête marteau (13), chacune fixée à l'élément de base de fixation par une partie filetée et s'engageant de manière coulissante, par une partie à tête marteau, avec une rainure longitudinale supérieure assortie (804, 904) d'un rail supérieur correspondant,
un clip de fixation (17) s'engageant dans un canal rainuré assorti (1403) de l'élément de base de fixation, et
une bride d'accouplement (18, 19) fixée sur le clip de fixation pour serrer un panneau photovoltaïque au moins d'un côté longitudinal de la bride entre l'élément de base de fixation et la bride, de sorte que chaque panneau photovoltaïque fixé à l'aide des assemblages de fixation est positionné directement au-dessus de chaque panneau porteur.

2. Le système selon la revendication 1, dans lequel :
le rail supérieur d'accouplement est sélectionné parmi un rail supérieur intermédiaire (8) et un rail supérieur d'extrémité (9), le rail inférieur et le rail supérieur intermédiaire étant chacun pourvus de deux joints en caoutchouc espacés (10) qui sont fixés le long des deux côtés longitudinaux du rail à partir d'un axe longitudinal du rail, et le rail supérieur d'extrémité étant pourvu d'un joint en caoutchouc (10) fixé le long d'un des deux côtés longitudinaux du rail supérieur d'extrémité à partir d'un axe longitudinal du rail,
chacun des panneaux porteurs est fermement serré, par une extrémité, entre l'un des deux joints en caoutchouc du rail inférieur et l'un correspondant des deux joints en caoutchouc du rail supérieur intermédiaire de ladite première assemblée de rails, et, par l'extrémité opposée, entre l'un des deux joints en caoutchouc du rail inférieur et le joint correspondant du rail supérieur intermédiaire ou du rail supérieur d'extrémité de ladite autre assemblée de rails, les extrémités opposées de chaque paire de panneaux alvéolaires en polycarbonate étant serrées entre l'un des deux joints opposés du rail inférieur et l'un des deux joints opposés correspondants du rail supérieur de la même assemblée de rails.

3. Le système selon la revendication 2, dans lequel la bride d'accouplement est sélectionnée parmi une bride intermédiaire (18) et une bride d'extrémité (19), la bride intermédiaire étant configurée pour serrer deux panneaux photovoltaïques depuis les deux côtés longitudinaux de la bride intermédiaire, et la bride d'extrémité étant configurée pour serrer un panneau photovoltaïque depuis l'un des côtés longitudinaux de la bride d'extrémité.

4. Le système selon l'une quelconque des revendications précédentes, dans lequel le rail inférieur et le rail supérieur sont formés en tant que longues pièces moulées par extrusion continues fixées l'une à l'autre par des sections longitudinales centrales, et dans lequel de préférence le rail supérieur est fixé au-dessus du rail inférieur avec une partie de paroi supérieure (701) du rail inférieur insérée dans une rainure inférieure complémentaire (801, 901) du rail supérieur.

5. Le système selon l'une quelconque des revendications précédentes, dans lequel chaque joint en caoutchouc est formé en tant que pièce longue continue comprenant un corps principal (1001) ayant une surface inférieure (1002) qui contacte étroitement le panneau porteur, et une saillie à bride (1003) s'étendant en direction verticale depuis une partie centrale d'une surface supérieure (1004) et s'engageant fermement avec une portion rainurée en forme de U correspondante (7001a, 7001b, 8032a, *8032b* ou 9032) comprise le long de toute la longueur longitudinale du rail, dans laquelle la surface inférieure du joint en caoutchouc est de préférence ondulée ou nervurée.

6. Le système selon l'une quelconque des revendications précédentes, dans lequel la rainure longitudinale supérieure (804, 904) de chaque rail supérieur est en U et est formée depuis un côté supérieur du rail supérieur le long d'un axe longitudinal central du rail supérieur.

7. Le système selon l'une quelconque des revendications précédentes, dans lequel la structure de support est un carport, et le système comprend en outre au moins deux colonnes (1) à fixer par une première extrémité au plancher ou au sol à une distance les unes des autres, au moins deux éléments porteurs (2) chacun fixé obliquement par une extrémité (201) à une deuxième extrémité (101) de la colonne correspondante, et au moins trois traverses (3) solidarisées à distance les unes des autres sur les au moins deux éléments porteurs, les rails inférieurs étant disposés sur les traverses dans une direction perpendiculaire à la longueur des traverses et étant fixés aux traverses.

8. Le système selon la revendication 7, comprenant en outre une gouttière pour la collecte des eaux pluviales, qui est montée sur les au moins deux éléments porteurs à l'aide de supports de gouttière (12) chacun fixé à un élément porteur latéral correspondant à l'extrémité par laquelle l'élément porteur latéral est attaché à la colonne, de sorte que la gouttière est disposée à l'arête où les colonnes se raccordent aux éléments porteurs latéraux, dans une direction perpendiculaire à la longueur des éléments porteurs latéraux, dans laquelle de préférence le support de gouttière est pourvu d'un évidement en C (1214) qui s'ajuste à une partie de paroi en C (604) comprise par la gouttière.

9. Le système selon l'une quelconque des revendications précédentes, dans lequel les panneaux porteurs sont en polycarbonate alvéolaire.

10. Un procédé d'installation de panneaux photovoltaïques (PV) (5) sur une structure de support, comprenant les étapes suivantes :
fournir des rails inférieurs (7) et des rails supérieurs assortis (8, 9) adaptés pour l'installation coulissante des panneaux photovoltaïques (PV) sur ceux-ci,
fournir des panneaux porteurs (4),
fournir des éléments de base de fixation (14), des vis à tête marteau (13), des clips de fixation (17) et des pinces (18, 19) s'emboîtant avec les clips de fixation,
fixer des joints en caoutchouc (10) aux rails inférieurs (7) et aux rails supérieurs (8, 9) sur toute la longueur des rails,
serrer fermement chaque panneau porteur par une extrémité entre les joints en caoutchouc du rail inférieur et le rail supérieur assorti formant un assemblage de rails, et par l'extrémité opposée entre les joints en caoutchouc du rail inférieur et le rail supérieur assorti formant un autre assemblage de rails, de sorte que les extrémités en vis-à-vis de chaque paire de panneaux porteurs adjacents partagent le même assemblage de rails,
fixer deux vis à tête marteau à chacun des éléments de base de fixation par une partie filetée,
engager de manière coulissante les deux vis à tête marteau, par une partie à tête marteau, dans une rainure longitudinale supérieure assortie (804, 904) d'un rail supérieur correspondant,
engager le clip de fixation avec un canal rainuré assorti (1403) de chacun des éléments de base de fixation, et
serrer un panneau photovoltaïque (PV) au moins d'un côté longitudinal entre l'élément de base de fixation correspondant et la pince en fixant la pince au clip de fixation, chaque élément de base de fixation muni de deux vis à tête marteau, d'un clip de fixation et d'une pince fixés à l'élément de base de fixation formant un ensemble de fixation (27), et chaque panneau photovoltaïque (PV) fixé à l'aide des ensembles de fixation est disposé directement au-dessus de chaque panneau porteur.

11. La méthode selon la revendication 10, comprenant en outre la fixation du rail inférieur et du rail supérieur l'un à l'autre au niveau des sections longitudinales centrales des rails, les rails inférieur et supérieur étant formés en tant qu'éléments extrudés longitudinaux continus, et de préférence le rail supérieur est fixé sur le rail inférieur avec une portion de paroi supérieure (701) du rail inférieur insérée dans une rainure inférieure complémentaire (801, 901) du rail supérieur.

12. La méthode selon la revendication 10 ou 11, dans laquelle le joint en caoutchouc, qui est formé en tant qu'élément longitudinal continu et comprend un corps principal (1001) ayant une surface inférieure (1002) assurant un contact étanche avec le panneau de support, et une saillie à bride (1003) s'étendant dans une direction verticale depuis une partie centrale d'une surface supérieure (1004), est attaché à chaque rail en engageant étroitement la saillie à bride dans une portion rainurée en forme de U correspondante (7001a, 7001b, 8032a, *8032b* ou 9032) comprise sur toute la longueur longitudinale du rail, la surface inférieure du joint en caoutchouc étant de préférence ondulée ou nervurée.

13. Procédé selon l'une quelconque des revendications 10 à 12 précédentes, dans lequel le procédé comprend en outre de :
prévoir au moins deux colonnes (1) et fixer ces colonnes par une première extrémité au plancher ou au sol, à une distance les unes des autres,
prévoir au moins deux éléments porteurs (2) et fixer obliquement chaque élément porteur par une extrémité (201) à une deuxième extrémité (101) d'une colonne correspondante desdites au moins deux colonnes, et
prévoir au moins trois traverses (3) et fixer les traverses à une distance les unes des autres sur les au moins deux éléments porteurs,
disposer les rails inférieurs sur les traverses dans une direction perpendiculaire à la longueur des traverses et fixer les rails inférieurs aux traverses.

14. Procédé selon la revendication 13, comprenant en outre :
prévoir une gouttière adaptée à la collecte des eaux pluviales,
prévoir des supports de gouttière (12) et fixer les supports de gouttière à l'un des éléments porteurs latéraux correspondants à l'extrémité par laquelle l'élément porteur latéral est fixé à la colonne,
monter la gouttière sur les supports de gouttière fixés aux éléments porteurs latéraux, de sorte que la gouttière est disposée à l'arête où les colonnes se raccordent aux éléments porteurs latéraux, dans une direction perpendiculaire à la longueur des éléments porteurs latéraux,
dans lequel de préférence le support de gouttière est pourvu d'un évidement en C (1214) qui s'ajuste à une partie de paroi en C (604) comprise par la gouttière.

15. Le procédé selon l'une quelconque des revendications 10 à 14, dans lequel les panneaux porteurs fournis sont en polycarbonate alvéolaire.
